(19) Europäisches Patentamt
European Patent Office
Office européen des brevets

(11) Veröffentlichungsnummer: **0 105 415**
**B1**

# (12) EUROPÄISCHE PATENTSCHRIFT

(45) Veröffentlichungstag der Patentschrift: **08.01.86**

(51) Int. Cl.⁴: **C 07 F 9/24**, A 01 N 57/26

(21) Anmeldenummer: **83109424.8**

(22) Anmeldetag: **22.09.83**

(54) **Cyclopropyl-methyl-(thio)-phosphorsäureamide, Verfahren zu ihrer Herstellung und ihre Verwendung zur Bekämpfung von Schädlingen.**

(30) Priorität: **01.10.82 DE 3236431**

(43) Veröffentlichungstag der Anmeldung: **18.04.84 Patentblatt 84/16**

(45) Bekanntmachung des Hinweises auf die Patenterteilung: **08.01.86 Patentblatt 86/2**

(84) Benannte Vertragsstaaten: **BE CH DE FR GB IT LI NL**

(56) Entgegenhaltungen:
**EP - A - 0 024 649**
**US - A - 3 514 504**
**US - A - 3 956 486**

(73) Patentinhaber: **BASF Aktiengesellschaft, Carl-Bosch-Strasse 38, D-6700 Ludwigshafen (DE)**

(72) Erfinder: **Buerstinghaus, Rainer, Dr., Weinbergstrasse 85, D-6940 Weinheim (DE)**
Erfinder: **Kiehs, Karl, Dr., Sudetenstrasse 22, D-6840 Lampertheim 1 (DE)**
Erfinder: **Adolphi, Heinrich, Dr., Kalmitweg 11, D-6703 Limburgerhof (DE)**

EP 0 105 415 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Bestimmte cyclopropyl-methyl-substituierte Phosphorsäureamide sind aus der US-PS Nr. 4296108 sowie der DE-OS Nr. 2934229 bekannt. Sie eignen sich zur Bekämpfung von Insekten, Spinnentieren und Nematoden. Deren Wirkung ist jedoch, speziell bei geringer Konzentration, nicht immer ganz zufriedenstellend.

Es wurde gefunden, dass Cyclopropyl-methyl-(thio)-phosphorsäureamide der Formel I

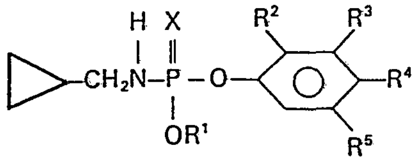

(I),

in der

$R^1$ eine unverzweigte oder verzweigte Alkylgruppe mit bis zu 4 Kohlenstoffatomen,

X Sauerstoff oder Schwefel bedeutet und $R^2$, $R^3$, $R^4$, $R^5$ gleich oder verschieden sind und jeweils für Wasserstoff, Fluor, Chlor, Brom, Jod, Nitro, Cyano, Methyl, Methylthio oder Trifluormethyl stehen, insektizid, akarizid und nematizid bereits als gut wirksam bekannten, strukturell ähnlichen Wirkstoffen überlegen sind.

Hinsichtlich der anwendungstechnischen Eigenschaften der neuen Wirkstoffe, Hinweisen für ihre Formulierung und mögliche Mischungspartner zur Erzielung synergistischer Effekte wird auf die Angaben in der EP-Anmeldung Nr. 81107473.1 (Veröffentlichungsnummer 0050219) verwiesen.

Die Cyclopropyl-methyl-(thio)-phosphorsäureamide der Formel I können durch Umsetzung entsprechender Phenole (II)

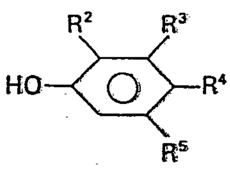

(II),

mit entsprechenden neuen, zur Erfindung gehörenden (Thio)-Phosphorsäureesteramid-halogeniden (III)

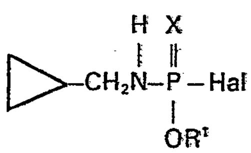

(III),

gegebenenfalls in Gegenwart eines Säureakzeptors erhalten werden, wobei Hal(ogen) d.h. Brom oder Chlor in Formel III aus wirtschaftlichen Gründen vorzugsweise ein Chloratom bedeutet.

Die Umsetzung wird zweckmässigerweise in einem Lösungs- oder Verdünnungsmittel ausgeführt. Hierzu sind beispielsweise geeignet: aliphatische und aromatische, gegebenenfalls chlorierte Kohlenwasserstoffe, wie Petrolether, Benzol, Toluol, Xylol, Benzin, Dichlormethan, Chloroform, Tetrachlormethan, 1,2-Dichlorethan, Chlorbenzol, Ether wie Diethyl- und Di-n-butylether, Methyl-tert.-butylether, Tetrahydrofuran, Dioxan; Ketone, beispielsweise Aceton, Methylethylketon, Methylisopropylketon; Nitrile, wie Acetonitril und Propionitril, ferner typische aprotisch-dipolare Stoffe wie Dimethylformamid, Dimethylsulfoxid. Auch Gemische dieser Stoffe können als Lösungs- oder Verdünnungsmittel verwendet werden.

Als Säurebindemittel (Säureacceptor) eignen sich die bei der Phosphorylierung von Hydroxyverbindungen üblichen basischen Mittel. Besonders geeignet sind Alkalimetallcarbonate oder -alkoholate, wie Natrium- und Kaliumcarbonat, -methylat und -ethylat, ferner aliphatische, aromatische und heterocyclische Amine, z.B. Triethylamin, Dimethylamin, Piperidin, Dimethylanilin, Dimethylbenzylamin und Pyridin. In einigen Fällen ist die Verwendung von Alkyllithiumverbindungen, z.B. n-Butyllithium, oder Alkalimetallhydriden, z.B. Natriumhydrid, vorteilhaft.

Anstelle des Zusatzes eines Säureacceptors kann man auch vor der Umsetzung die Salze der Phenole, etwa die Alkalimetall-, Erdalkalimetall- oder Ammoniumsalze herstellen und diese umsetzen.

Üblicherweise setzt man die Ausgangsstoffe in stöchiometrischem Verhältnis ein. Ein Überschuss des einen oder anderen kann in Einzelfällen aber durchaus vorteilhaft sein.

Die Umsetzung verläuft gewöhnlich oberhalb von Raumtemperatur mit ausreichender Geschwindigkeit. 120°C müssen i.a. nicht überschritten werden. Da sie in einigen Fällen unter Wärmeentwicklung verläuft, kann es von Vorteil sein, eine Kühlmöglichkeit vorzusehen.

Das Reaktionsgemisch wird in üblicher Weise aufgearbeitet, z.B. durch Versetzen mit Wasser, Trennen der Phasen, Destillation, Säulenchromatographie und/oder Umkristallisation.

(Thio)Phosphorsäureamid-halogenide der Formel III sind ebenfalls neu. Sie lassen sich durch Umsetzung von O-Alkyl(thio)phosphoresterdihalogeniden mit Cyclopropylmethylamin erhalten, beispielsweise nach folgender Gleichung:

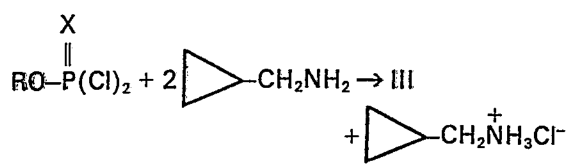

Diese Umsetzung verläuft relativ heftig; sie findet schon zwischen −70 und +20°C, vorzugsweise zwischen −30 und 0°C statt. Man verwendet zweckmässig eines der erwähnten Lösungs- und Verdünnungsmittel.

Das zweite Moläquivalent Cyclopropylmethylamin lässt sich in seiner Funktion als Säurebindemittel ebensogut durch die einfach-molare Menge eines tertiären Amins, wie Triethylamin, Trimethylamin, N,N-Dimethyl-N-ethylamin, Pyridin oder Picolin ersetzen.

Phenole der Formel II und ihre Herstellung sind bekannt (Houben-Weyl, Methoden der organischen Chemie, Auflage, Band VI/1c, Teile 1 und 2).

Die erfindungsgemässen Cyclopropyl-methyl-(thio)-phosphorsäureamide (I) erhält man auch, wenn man zunächst ein Phosphorsäurephenylesterhalogenid IV

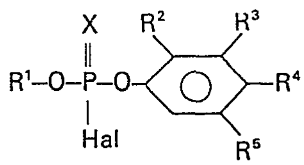 (IV),

herstellt (Houben-Weyl, Methoden der organischen Chemie, 4. Auflage, Band XII/2, S. 278, 279, 612) und dieses mit Cyclopropylmethylamin (in mindestens 2facher molarer Menge) umsetzt. I.a. läuft diese Umsetzung bei einer Temperatur unter 120, vorzugsweise 20 bis 60°C ab. Das Amin kann in reiner Form oder als wässerige Lösung verwendet werden, eines der vorgenannten Lösungs- oder Verdünnungsmittel kann man zusätzlich verwenden. Die erfindungsgemässen Stoffe fallen meist in Form farbloser oder schwach bräunlich gefärbter Öle an, die sich durch längeres Erwärmen auf mässig erhöhte Temperatur («Andestillieren») von den letzten flüchtigen Anteilen befreien und auf diese Weise reinigen lassen. Wenn kristalline Verbindungen erhalten werden, so kann man diese i.a. umkristallisieren.

Zur Charakterisierung der beispielhaft hergestellten Verbindungen I und III ist entweder der Schmelzpunkt, das $^1H-NMR$-Spektrum oder das IR-Spektrum mit typischen Absorptionsmaxima aus dem sog. «fingerprint»-Bereich zwischen 1500 $cm^{-1}$ und 900 $cm^{-1}$ angegeben.

*Vorprodukte:*

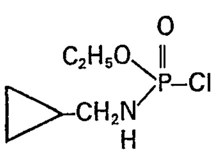

16,3 g O-Ethylphosphorsäureesterdichlorid werden in 80 ml Diethylether gelöst. Bei einer Temperatur von −15°C lässt man binnen 60 min unter schnellem Rühren eine Mischung aus 7,1 g (Cyclopropyl-methyl)amin, 10,1 g Triethylamin und 45 ml Diethylether zulaufen. Man lässt 3 h bei −10°C nachrühren, filtriert das ausgefallene Hydrochlorid ab und engt im Wasserstrahlvakuum ein. Das verbliebene Öl wird in einer Mischung Hexan/Diethylether (5:1) aufgenommen, auf 0°C abgekühlt und erneut filtriert. Nach Entfernen der letzten Lösungsmittelreste – zuletzt bei 30°C und 0,01 mbar – erhält man 16,0 g O-Ethyl-(N-cyclopropyl-methyl)-phosphorsäureesteramidchlorid als farbloses Öl.

Ausbeute: 81% der berechneten Menge.

60 MHz-$^1H$-NMR-Spektrum in $CDCl_3$ (δ-Werte in ppm):

0,3 (2H); 0,6(2H); 1,1 (1H); 1,4 (3H); 2,75-3,2 (2H); 4,0-4,65 (2H); 4,5-5,2 (1H).

Die folgenden Phosphoresteramidchloride sind in analoger Weise und mit vergleichbarer Ausbeute hergestellt worden:

O-Methyl-(N-cyclopropyl-methyl)-phosphorsäureesteramidchlorid.

60-MHz-$^1H$-NMR-Spektrum in $CDCl_3$ (δ-Werte in ppm):

0,25 (2H); 0,6 (2H); 1,1 (1H); 2,7-3,2 (2H); 3,9 (3H); 4,6-5,3 (1H).

O-Ethyl-(N-cyclopropyl-methyl)thiophosphorsäureesteramidchlorid.

60 MHz-$^1H$-NMR-Spektrum in $CDCl_3$ (δ-Werte in ppm):

0,25 (2H); 0,6 (2H); 1,1 (1H); 1,45 (3H); 2,7-3,25 (2H); 3,5-4,5 (1H); 3,95-4,5 (2H).

O-Methyl-(N-cyclopropyl-methyl)thiophosphorsäureesteramidchlorid.

80-MHz-H-NMR-Spektrum in $CDCl_3$ (δ-Werte in ppm):

0,3 (2H); 0,6 (2H); 1,1 (1H); 2,75-3,15 (2H); 3,5-4,2 (1H); 3,8 (3H).

*Beispiel 1:*

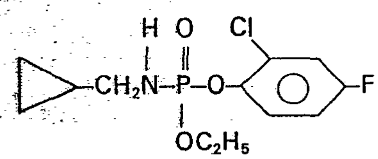

7,70 g 2-Chlor-4-fluorphenol und 9,87 g O-Ethyl-(N-cyclopropyl-methyl)-phosphoresteramid-chlorid werden in 50 ml Acetonitril vorgelegt und unter intensivem Rühren binnen 20 min mit 6,90 g fein gepulvertem Kaliumcarbonat versetzt. Man rührt noch 8 h bei 30°C, saugt dann von unlöslichen Bestandteilen ab und engt unter vermindertem Druck ein. Der Rückstand wird in Ether aufgenommen, je dreimal mit 5%iger Natronlauge und Wasser gewaschen, über Natriumsulfat getrocknet und vom Lösungsmittel befreit. Nach dem Andestillieren bei 0,01 mbar und 50°C verbleiben 14,4 g O-Ethyl-O-(2-chlor-4-fluorphenyl)-(cyclopropyl-methyl)phosphoramidat in Form eines klaren, gelblichen Öles. Ausbeute: 94%.

*Analyse* für $C_{12}H_{16}ClFNO_3P$ (307,5):

| | | | |
|---|---|---|---|
| Berechnet: | C 46,8 | H 5,2 | N 4,6% |
| Gefunden: | C 46,7 | H 5,4 | N 4,7% |

Infrarotabsorptionen ($cm^{-1}$): 1487, 1188, 1052, 1039, 890.

*Beispiel 2:*

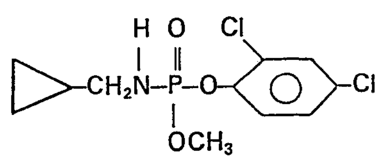

Analog Beispiel 1 erhält man durch Umsetzung von 8,15 g 2,4-Dichlorphenol mit 9,17 g O-Methyl-(N-cyclopropyl-methyl)-phosphoresteramidchlorid und 6,9 g Kaliumcarbonat in 50 ml Aceton 10,3 g O-Methyl-O-(2,4-dichlorphenyl)-(cyclopropylmethyl)-phosphoramidat als farbloses Öl. Ausbeute: 72%.

*Analyse* für $C_{11}H_{14}Cl_2NO_3P$ (310):

| | | | |
|---|---|---|---|
| Berechnet: | C 42,6 | H 4,5 | N 4,5% |
| Gefunden: | C 42,9 | H 4,4 | N 4,3% |

Infrarotabsorptionen ($cm^{-1}$): 1475, 1265-1235, 1100, 1045, 925.

*Beispiel 3:*

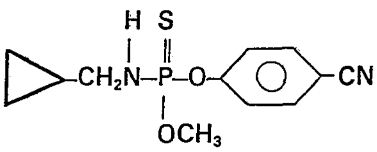

Eine Lösung von 5,95 g 4-Cyanophenol in 50 ml Tetrahydrofuran wird mit 1,58 g Natriumhydrid (als 80%ige Suspension in Paraffin) versetzt. Man lässt 3 h bei Raumtemperatur nachrühren und fügt nach Beendigung der Wasserstoffentwicklung 9,98 g O-Methyl-(N-cyclopropyl-methyl)thiophosphoresteramidchlorid tropfenweise hinzu, wobei die Temperatur auf 32°C steigt. Nach eintägigem Rühren bei 65°C wird das Lösungsmittel im Rotationsverdampfer entfernt, der Rückstand in Methyl-tert.-butylether aufgenommen, viermal mit 5%iger Natronlauge und dreimal mit Wasser gewaschen. Nach dem Trocknen über Natriumsulfat werden sämtliche flüchtigen Anteile bei 45°C und 0,02 mbar abgezogen, wobei 10,4 g O-Methyl-O-(4-cyanophenyl)-(cyclopropyl-methyl)-phosphorthioamidat als gelbliches Öl verbleiben. Ausbeute: 74%.

*Analyse* für $C_{12}H_{15}N_2O_2PS$ (282):

| | | | |
|---|---|---|---|
| Berechnet: | C 51,1 | H 5,4 | N 9,9% |
| Gefunden: | C 51,4 | H 5,5 | N 9,8% |

Infrarotabsorptionen ($cm^{-1}$): 1499, 1233, 1081, 1042, 908.

*Beispiel 4:*

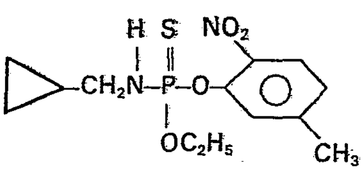

Unter Kühlung wird eine Lösung von 11,9 g O-Ethyl-O-(2-nitro-5-methyl-phenyl)thiophosphordiesterchlorid in 60 ml Toluol tropfenweise mit 6,0 g (Cyclopropyl-methyl)amin versetzt. Man lässt 12 h bei 20°C rühren, saugt vom ausgefallenen Hydrochlorid ab und wäscht dreimal mit Wasser.

Nach dem Trocknen über Natriumsulfat wird das Lösungsmittel im Vakuum entfernt und der Rückstand bei 80°C und 0,005 mbar andestilliert. Man erhält 11,3 g O-Ethyl-O-(2-nitro-5-methyl-phenyl)-(cyclopropyl-methyl)-phosphoramidat, welches zu einem gelblichen Feststoff erstarrt. Fp.: 30,5-31,5°C. Ausbeute: 86%.

*Analyse* für $C_{13}H_{19}N_2O_4PS$ (330):

| | | | |
|---|---|---|---|
| Berechnet: | C 33,7 | H 3,6 | N 3,6% |
| Gefunden: | C 34,1 | H 3,8 | N 3,5% |

Infrarotabsorptionen ($cm^{-1}$): 1357, 1072, 1037, 969.

Die nachstehend in der Tabelle 1 aufgeführten Verbindungen wurden auf jeweils einem der in den Beispielen 1 bis 4 angegebenen Wege erhalten; andere Verbindungen, die der Formel (I) entsprechen, können auf die gleiche Weise unter entsprechender Änderung der Mengenangaben der Vorschriften und – wegen der besten Reaktionsbedingungen – ggf. nach einem Vorversuch erhalten werden.

*(Tabelle auf der nächsten Seite)*

Die erfindungsgemässen Cyclopropyl-methyl-(thio)phosphorsäureamide sind geeignet, Schädlinge aus der Klasse der Insekten, Spinnentiere und Nematoden wirksam zu bekämpfen. Sie können im Pflanzenschutz sowie auf dem Hygiene-, Vorratsschutz- und Veterinärsektor als Schädlingsbekämpfungsmittel eingesetzt werden.

Zu den schädlichen Insekten gehören aus der Ordnung der Schmetterlinge (Lepidoptera) beispielsweise Plutella maculipennis (Kohlschabe), Leucoptera coffeella (Kaffeemotte), Hyponomeuta malinellus (Apfelbaumgespinstmotte), Argyresthia conjugella (Apfelmotte), Sitotroga cerealella (Getreidemotte), Phthorimaea operculella (Kartoffelmotte), Capua reticulana (Apfelschalenwickler), Sparganothis pilleriana (Springwurm), Cacoecia murinana (Tannentriebwickler), Tortrix viridana (Eichenwickler), Clysia ambiguella (Heu- und Sauerwurm), Evetria buoliana (Kieferntriebwickler), Polychrosis botrana (Bekreuzter Traubenwickler), Cydia pomonella (Obstmade), Laspeyresia molesta (Pfirsichtriebbohrer), Laspeyresia funebrana (Pflaumenwickler), Ostrinia nubilalis (Maiszünsler), Loxostege sticticalis (Rübenzünsler), Ephestia kuehniella (Mehlmotte), Chilo suppressalis (Reisstengelbohrer), Galleria mellonella (Wachsmotte), Malacosoma neustria (Ringelspinner), Dendrolimus pini (Kiefernspinner), Thaumatopoea pityocampa (Pinienprozessionsspinner), Phalera bucephala (Mondfleck), Cheimatobia brumata (Kleiner Frostspanner), Hibernia defoliaria (Grosser Frostspanner), Bupalus piniarus (Kiefernspanner), Hyphantria cunea (Weisser Bärenspinner), Agrotis segetum (Wintersaateule), Agrotis ypsilon (Ypsiloneule), Barathra brassicae (Kohleule), Cirphis unipuncta (Heerwurm), Prodenia litura (Baumwollraupe), Laphygma exigua (Rüben-Heerwurm), Panolis flammea (Forleule), Earias insulana (Baumwollkapselwurm), Plusia gamma (Gammaeule), Alabama argillacea (Baumwollblattwurm), Lymantria dispar (Schwammspinner), Lymantria monacha (Nonne), Pieris brassicae (Kohlweissling), Aporia crataegi (Baumweissling);

aus der Ordnung der Käfer (Coleoptera) beispielsweise Blitophaga undata (Schwarzer Rübenaaskäfer), Melanotus communis (Drahtwurm), Limonius californicus (Drahtwurm),

| Bsp. Nr. | $R^1$ | $R^2$ | $R^3$ | $R^4$ | $R^5$ | X | IR-Absorptionen ($cm^{-1}$) |
|---|---|---|---|---|---|---|---|
| 5 | $C_2H_5$ | H | H | CN | H | O | 1497, 1240, 1040, 915 |
| 6 | $C_2H_5$ | H | H | $CF_3$ | H | O | 1323, 1238, 1123, 1102, 965, 942 |
| 7 | $C_2H_5$ | Cl | H | $CF_3$ | H | O | 1320, 1270, 1125, 1070, 1040 |
| 8 | $C_2H_5$ | $NO_2$ | H | H | $CH_3$ | O | 1453, 1375, 1248, 1044, 968 |
| 9 | $C_2H_5$ | H | $CH_3$ | $SCH_3$ | H | O | 1225, 1163, 1043, 1006, 961 |
| 10 | $C_2H_5$ | H | H | $SCH_3$ | H | O | 1486, 1220, 1041, 922 |
| 11 | $C_2H_5$ | H | H | $NO_2$ | H | O | 1516, 1345, 1240, 1040, 915 |
| 12 | $CH_3$ | Cl | H | Cl | Cl | O | 1465, 1350, 1250, 1225, 1115, 1083, 1050, 962 |
| 13 | $CH_3$ | H | H | CN | H | O | 1240, 1100, 1050, 920 |
| 14 | $CH_3$ | Cl | H | $CF_3$ | H | O | 1328, 1130, 1083, 1045 |
| 15 | $CH_3$ | H | H | $CF_3$ | H | O | 1330, 1240, 1122, 1105, 1070, 1050, 923 |
| 16 | $CH_3$ | Cl | H | F | H | O | 1489, 1246, 1190, 1042 |
| 17 | $CH_3$ | H | H | F | H | O | 1242, 1197, 1047, 920 |
| 18 | $CH_3$ | H | H | $SCH_3$ | H | O | 1486, 1219, 1170, 1100, 1048, 921 |
| 19 | $CH_3$ | H | H | $NO_2$ | H | O | 1346, 1240, 1110, 1048, 918 |
| 20 | $CH_3$ | H | $CH_3$ | $SCH_3$ | H | O | 1473, 1242, 1228, 1050, 962 |
| 21 | $CH_3$ | $NO_2$ | H | H | $CH_3$ | O | 1240, 1050, 1020, 970 |
| 23 | $C_2H_5$ | H | H | $CF_3$ | H | S | 1320, 1165, 1123, 1065 |
| 24 | $C_2H_5$ | H | H | $NO_2$ | H | S | 1350, 1230, 1080, 1030, 900 |
| 25 | $C_2H_5$ | H | $CH_3$ | $NO_2$ | H | S | 1340, 1237, 1080, 1038, 1020, 965 |
| 26 | $C_2H_5$ | $NO_2$ | H | H | H | S | 1350, 1077, 1030, 1008 |
| 27 | $C_2H_5$ | Cl | H | Cl | H | S | 1472, 1060, 1034, 916 |
| 28 | $C_2H_5$ | H | H | $SCH_3$ | H | S | 1485, 1220, 1044, 922 |
| 29 | $C_2H_5$ | H | $CH_3$ | $SCH_3$ | H | S | 1241, 1227, 1045, 961 |
| 30 | $C_2H_5$ | Cl | H | Cl | Cl | O | 1462, 1348, 1249, 1083, 1045, 960 |
| 31 | $C_2H_5$ | Cl | H | Cl | H | O | 1474, 1060, 1040, 917 |
| 32 | $CH_3$ | H | H | $NO_2$ | H | S | 1491, 1346, 1234, 1081, 1042, 909 |
| 33 | $CH_3$ | H | H | F | H | S | 1195, 1083, 1044, 933, 913 |
| 34 | $CH_3$ | H | $CH_3$ | $NO_2$ | H | S | 1344, 1240, 1081, 1049, 1018, 969 |
| 35 | $CH_3$ | H | H | $SCH_3$ | H | S | 1459, 1213, 1349, 1250,1083, 1043, 957 |
| 38 | $CH_3$ | Cl | H | Cl | H | S | 1476, 1257, 1081, 1061, 1042, 917 |

Agriotes lineatus (Saatschnellkäfer), Agriotes obscurus (Humusschnellkäfer), Agrilus sinuatus (Birnbaum-Prachtkäfer), Meligethes aeneus (Rapsglanzkäfer), Atomaria linearis (Moosknopfkäfer), Epilachna varicestris (Mexikanischer Bohnenkäfer), Phyllopertha horticola (Junikäfer), Popillia japonica (Japankäfer), Melolontha melolontha (Feldmaikäfer), Melolontha hippocastani (Waldmaikäfer), Amphimallus solstitialis (Brachkäfer), Crioceris asparagi (Spargelhähnchen), Lema melanopus (Getreidehähnchen), Leptinotarsa decemlineata (Kartoffelkäfer), Phaedon cochleariae (Meerrettich-Blattkäfer), Phyllotreta nemorum (Kohlerdfloh), Chaetocnema tibialis (Rübenflohkäfer), Phylloides chrysocephala (Raps-Flohkäfer), Diabrotica 12-punctata (Südlicher Maiswurzelwurm), Cassida nebulosa (Nebliger Schildkäfer), Bruchus lentis (Linsenkäfer), Bruchus rufimanus (Pferdebohnenkäfer), Bruchus pisorum (Erbsenkäfer), Sitona lineatus (Linierter Blattrandkäfer), Otiorrhynchus sulcatus (Gefurchter Lappenrüssler), Otiorrhynchus ovatus (Erdbeerwurzelrüssler), Hylobies abietis (Grosser Brauner Rüsselkäfer), Byctiscus betulae (Rebenstecher), Anthonomus pomorum (Apfelblütenstecher), Anthonomus grandis (Kapselkäfer), Ceuthorrhynchus assimilis (Kohlschotenrüssler), Ceuthorrhynchus napi (Grosser Kohltriebrüssler), Sitophilus granaria (Kornkäfer), Anisandrus dispar (Ungleicher Holzborkenkäfer), Ips typographus (Buchdrucker), Blastophagus piniperda (Gefurchter Waldgärtner);

aus der Ordnung der Zweiflügler (Diptera) beispielsweise Lycoria pectoralis, Mayetiola destructor (Hessenfliege), Dasineura brassicae (Kohlschoten-Gallmücke), Contarinia tritici (Gelbe Weizen-Gallmücke), Haplodiplosis equestris (Sattelmücke), Tipula paludosa (Wiesenschnake), Tipula oleracea (Kohlschnake), Dacus cucurbitae (Melonenfliege), Dacus oleae (Olivenfliege), Ceratitis capitata (Mittelmeerfruchtfliege), Rhagoletis cerasi (Kirschfruchtfliege), Rhagoletis pomonella (Apfelmade), Anastrepha ludens (Mexikanische Fruchtfliege), Oscinella frit (Fritfliege), Phorbia coarctata (Brachfliege), Phorbia antiqua (Zwiebelfliege), Phorbia brassicae (Kleine Kohlfliege), Pegomya hyoscyami (Rübenfliege), Anopheles maculipennis, Culex pipiens, Aedes aegypti (Gelbfiebermücke), Aedes vexans, Tabanus bovinus (Rinderbremse), Tipula paludosa (Wiesenschnake), Musca domestica (Stubenfliege), Fannia canicularis (Kleine Stubenfliege), Muscina stabulans, Glossina morsitans (Tsetse-Fliege), Oestrus ocis, Chrysomya macellaria, Chrysomya hominivorax, Lucilia cuprina, Lucilia sericata, Hypoderma lineata;

aus der Ordnung der Hautflügler (Hymenoptera) beispielsweise Athalia rosae (Rübenblattwespe), Hoplocampa minuta (Pflaumensägewespe), Monomorium pharaonis (Pharaoameise), Solenopsis geminata (Feuerameise), Atta sexdens (Blattschneiderameise);

aus der Ordnung der Wanzen (Heteroptera) beispielsweise Nezara viridula (Grüne Reiswanze), Eurygaster integriceps (Asiatische Getreidewanze), Blissus leucopterus (Chinch bug), Dysdercus cingulatus (Kapok-Wanze), Dysdercus intermedius (Baumwollwanze), Piesma quadrata (Rübenwanze), Lygus pratensis (Gemeine Wiesenwanze);

aus der ordnung der Pflanzensauger (Homoptera) beispielsweise Perkinsiella saccharicida (Zuckerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weisse Fliege), Aphis fabae (Schwarze Bohnenlaus), Aphis pomi (Grüne Apfellaus), Aphis sambuci (Holunderblattlaus), Aphidula nastrutii (Kreuzdornblattlaus), Cerosipha gossypii (Gurkenblattlaus), Sappaphis mali (Rosige Apfellaus), Sappaphis mala (Mehlige Birnblattlaus), Dysphis radicola (Mehlige Apfelfalterlaus), Brachycaudus cardui (Grosse Pflaumenblattlaus), Brevicoryne brassicae (Kohlblattlaus), Phorodon humuli (Hopfenblattlaus), Rhopalomyzus ascalonicus (Zwiebellaus), Myzodes persicae (Grüne Pfirsichlaus), Myzus cerasi (Schwarze Sauerkirschenlaus), Dysaulacorthum pseudosolani (Gefleckte Kartoffellaus), Acryrthosiphon onobrychis (Grüne Erbsenlaus), Macrosiphon rasae (Grosse Rosenblattlaus), Megoura viciae (Wickenlaus), Schizoneura lanuginosa (Birnenblattlaus), Pemphigus bursarius (Salatwurzellaus), Dreyfusia nordmannianae (Tannentrieblaus), Dreyfusia piceae (Weisstannenstammlaus), Adelges laricis (Rote Fichtengallenlaus), Viteus vitifolii (Reblaus);

aus der Ordnung der Termiten (Isoptera) beispielsweise Reticulitermes lucifugus, Calotermes flavicollis, Leucotermes flavipes, Termes natalensis;

aus der Ordnung der Geradflügler (Orthoptera) beispielsweise Forficula auricularia (Gemeiner Ohrwurm), Acheta domestica (Heimchen), Gryllotalpa gryllotalpa (Maulwurfsgrille), Tachycines asynamorus (Gewächshausschrecke), Locusta migratoria (Wanderheuschrecke), Stauronotus maroccanus (Marokkanische Wanderheuschrekke), Schistocerca peregrina (Wanderheuschrekke), Nomadacris septemfasciata (Wanderheuschrecke), Melanoplus spretus (Felsengebirgsheuschrecke), Melanoplus femur-rubrum (Rotbeinige Heuschrecke), Blatta orientalis (Küchenschabe), Blattella germanica (Deutsche Schabe), Periplaneta americana (Amerikanische Schabe), Blabera gigantea (Riesenschabe).

Zur Klasse der Arachnoidea gehören Spinnentiere (Acarina) beispielsweise Ixodes ricinus (Holzbock), Ornithodorus moubata, Amblyomma americanum, Dermacentor silvarum, Boophilus microplus, Tetranychus telarius, Tetranychus atlanticus, Tetranychus pacificus, Paratetranychus pilosus, Bryobia praetiosa.

Zur Klasse der Nemathelminthes zählen beispielsweise Wurzelgallennematoden, z.B. Meloidogyne incognita, Meloidogyne hapla, Meloidogyne javanica, Zysten bildende Nematoden, z.B. Heterodera rostochiensis, Heterodera schachtii, Heterodera avenae, Heterodera glycines, Heterodera triflolii, Stock- und Blattälchen, z.B. Ditylenchus dipsaci, Ditylenchus destructor, pratylenchus neglectus, Pratylenchus penetrans, pratylenchus goodeyi, Paratylenchus curvitatus sowie Tylenchorhynchus dubius, Tylenchorhynchus claytoni, Rotylenchus robustus, Heliocotylenchus multicinctus, Radopholus similis, Belonolaimus longicaudatus, Longidorus elongatus, Trichodorus primitivus.

Die Wirkstoffe können als solche, in Form ihrer Formulierungen oder den daraus bereiteten Anwendungsmöglichkeiten, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Giessen angewendet werden. Die Anwendungsformen richten sich ganz nach den Verwendungszwecken; sie sollten in jedem Fall möglichst die feinste Verteilung der erfindungsgemässen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser, in Betracht.

Wässerige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitteln in Wasser homogenisiert werden. Es können aber auch aus wirksamer Substanz Netz-, Haft-, Dispergier- oder Emulgiermittel und eventuell Lösungsmittel oder aus Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd,

Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenon, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Beispiele für Formulierungen sind:

I. 5 Gewichtsteile der Verbindung Nr. 1 werden mit 95 Gewichtsteilen feinteiligem Kaolin innig vermischt. Man erhält auf diese Weise ein Stäubemittel, das 3 Gew.-% des Wirkstoffs enthält.

II. 30 Gewichtsteile der Verbindung Nr. 2 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

III. 10 Gewichtsteile der Verbindung Nr. 4 werden in einer Mischung gelöst, die aus 90 Gewichtsteilen Xylol, 6 Gewichtsteilen des Anlagerungsproduktes von 8 bis 10 Mol Äthylenoxid an 1 Mol Ölsäure-N-monoethanolamid, 2 Gewichtsteilen Calciumsalz der Dodecylbenzolsulfonsäure und 2 Gewichtsteilen des Anlagerungsproduktes von 40 Mol Ethylenoxid an 1 Mol Ricinusöl besteht.

IV. 20 Gewichtsteile der Verbindung Nr. 13 werden in einer Mischung gelöst, die aus 60 Gewichtsteilen Cyclohexanon, 30 Gewichtsteilen Isobutanol, 5 Gewichtsteilen des Anlagerungsproduktes von 7 Mol Ethylenoxid an 1 Mol Isooctylphenol und 5 Gewichtsteilen des Anlagerungsproduktes von 40 Mol Ethylenoxid an 1 Mol Ricinusöl besteht.

V. 80 Gewichtsteile der Verbindung Nr. 19 werden mit 3 Gewichtsteilen des Natriumsalzes der Diisobutylnaphthalin-alpha-sulfonsäure, 10 Gewichtsteilen des Natriumsalzes einer Ligninsulfonsäure aus einer Sulfit-Ablauge und 7 Gewichtsteilen pulverförmigem Kieselsäuregel gut vermischt und in einer Hammermühle vermahlen.

Granulate, z.B. Umhüllungs-, Imprägnierungs- und Homogengranulate, können durch Bindung der Wirkstoffe an feste Trägerstoffe hergestellt werden.

Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löss, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im allgemeinen zwischen 0,1 und 95 Gew.-% Wirkstoff, vorzugsweise zwischen 0,5 und 90 Gew.-%.

Die Wirkstoffkonzentrationen in den anwendungsfertigen Zubereitungen können in grösseren Bereichen variiert werden.

Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Die Aufwandmenge an Wirkstoff beträgt unter Freilandbedingungen 0,2 bis 10, vorzugsweise 0,5 bis 2,0 kg/ha.

Zu den Wirkstoffen können Öle verschiedenen Typs, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemässen Mitteln im Gewichtsverhältnis 1:10 bis 10:1 zugemischt werden.

Beispielsweise können folgende Mittel zugemischt werden:

1,2-Dibrom-3-chlorpropan, 1,3-Dichlorpropen, 1,3-Dichlorpropen+1,2-Dichlorpropan, 1,2-Dibrom-ethan, 2-sec.-Butyl-phenyl-N-methylcarbamat, o-Chlorphenyl-N-methylcarbamat, 3-Isopropyl-5-methylphenyl-N-methylcarbamat, o-Isopropoxyphenyl-N-methylcarbamat, 3,5-Dimethyl-4-methylmercaptophenyl-N-methylcarbamat, 4-Dimethylamino-3,5-xylyl-N-methylcarbamat, 2-(1,3-Dioxolan-2-yl)-phenyl-N-methylcarbamat, 1-Naphthyl-N-methylcarbamat, 2,3-Dihydro-2,2-dimethyl-benzofuran-7-yl-N-methylcarbamat, 2,2-Dimethyl-1,3-benzodioxol-4-yl-N-methylcarbamat, 2-Dimethylamino-5,6-dimethyl-4-pyrimidinyl-dimethylcarbamat, 2-Methyl-2-(methylthio)-propionaldehyd-O-(methylcarbamoyl)-oxim, S-Methyl-N-[(methylcarbamoyl)-oxy]-thio-acetimidat, Methyl-N',N'-dimethyl-N-[(methylcarbamoyl)-oxy]-1-thiooxamidat, N-(2-Methyl-chlor-phenyl)-N',N'-dimethylformamidin, Tetrachlorthiophen, 1-(2,6-Difluor-benzoyl)-3-(4-chlor-phenyl)-harnstoff, O,O-Dimethyl-O-(p-nitrophenyl)-phosphorthioat, O,O-Diethyl-O-(p-nitrophenyl)-phosphorthioat, O-Ethyl-O-(p-nitrophenyl)-phenyl-phosphonothioat, O,O-Dimethyl-O-(3-methyl-4-nitrophenyl)-phosphorthioat, O,O-Diethyl-O-(2,4-dichlorphenyl)-phosphorthioat, O-Ethyl-O-(2,4-dichlorphenyl)-phenylphosphonothioat, O,O-Dimethyl-O-(2,4,5-trichlorphenyl)-phosphorthioat, O-Ethyl-O-(2,4,5-trichlorphenyl)-ethyl-phosphonothioat, O,O-Dimethyl-O-(4-brom-2,5-dichlorphenyl)-phosphorthioat, O,O-Dimethyl-O-(2,5-dichlor-4-jodphenyl)-phosphorthioat, O,O-Dimethyl-O-(3-methyl-4-methylthiophenyl)-phosphorthioat, O-Ethyl-O-(3-methyl-4-methylthiophenyl)-isopropyl-phosphoramidat, O,O-Diethyl-O-[p-methylsulfinyl-phenyl]-phosphorthioat, O-Ethyl-S-phenyl-ethyl-phosphonodithioat, O,O-Diethyl-

[2-chlor-1-(2,4-dichlorphenyl)-vinyl]-phosphat, O,O-Dimethyl-[2-chlor-1-(2,4,5-trichlorphenyl)]-vinyl-phosphat, O,O-Dimethyl-S-(1'-phenyl)-ethylacetat-phosphordithioat, Bis-(dimethylamino)-fluorphosphinoxid, Octamethyl-pyrophosphoramid, O,O,O,O-Tetraethyldithio-pyrophosphat, S-Chlormethyl-O,O-diethyl-phosphordithioat, O-Ethyl-S,S-dipropyl-phosphordithioat, O,O-Dimethyl-O-2,2-dichlorvinyl-phosphat, O,O-Dimethyl-1,2-dibrom-2,2-dichlorethylphosphat, O,O-Dimethyl-2,2,2-trichlor-1-hydroxy-ethyl-phosphonat, O,O-Dimethyl-S-[1,2-biscarbethoxy-ethyl-(1)]-phosphordithioat, O,O-Dimethyl-O-(1-methyl-2-carbmethoxy-vinyl)-phosphat, O,O-Dimethyl-S-(N-methyl-carbamoyl-methyl)-phosphordithioat, O,O-Dimethyl-S-(N-methyl-carbamoyl-methyl)-phosphorthioat, O,O-Dimethyl-S-(N-methoxyethyl-carbamoyl-methyl)-phosphordithioat, O,O-Dimethyl-S-(N-formyl-N-methyl-carbamoylmethyl)-phosphordithioat, O,O-Dimethyl-O-[1-methyl-2-(methyl-carbamoyl)-vinyl]-phosphat, O,O-Dimethyl-O-[(1-methyl-2-dimethylcarbamoyl)-vinyl]-phosphat, O,O-Dimethyl-O-[(1-methyl-2-chlor-2-diethylcarbamoyl)-vinyl]-phosphat, O,O-Diethyl-S-(ethyl-thio-methyl)-phosphordithioat, O,O-Diethyl-S-[(p-chlorphenylthio)-methyl]-phosphordithioat, O,O-Dimethyl-S-(2-ethylthioethyl)-phosphorthioat, O,O-Dimethyl-S-(2-ethylthioethyl)-phosphordithioat, O,O-Dimethyl-S-(2-ethylsulfinyl-ethyl)-phosphorthioat, O,O-Diethyl-S-(2-ethylthio-ethyl)-phosphordithioat, O,O-Diethyl-S-(2-ethylsulfinyl-ethyl)-phosphorthioat, O,O-Diethyl-thiophosphoryliminophenyl-acetonitril, O,O-Diethyl-S-(2-chlor-1-phthalimidoethyl)-phosphordithioat, O,O-Diethyl-S-[6-chlor-benzoxazolon-(2)-yl(3)]-methyldithiophosphat, O,O-Dimethyl-S-[2-methoxy-1,3,4-thiadiazol-5-[4H]-onyl-(4)-methyl]-phosphordithioat, O,O-Diethyl-O-[3,5,6-trichlor-pyridyl-(2)]-phosphorthioat, O,O-Diethyl-O-(2-pyrazinyl)-phosphorthioat, O,O-Diethyl-O-[2-isopropyl-4-methyl-pyrimidinyl-(6)]-phosphorthioat, O,O-Diethyl-O-[2-(diethylamino)-6-methyl-4-pyrimidinyl]-thionophosphat, O,O-Dimethyl-S-(4-oxo-1,2,3-benzotriazin-3-[4H]-yl-methyl)-phosphordithioat, O,O-Dimethyl-S-[(4,6-diamino-1,3,5-triazin-2-yl)-methyl]-phosphordithioat, O,O-Diethyl-(1-phenyl-1,2,4-triazol-3-yl)-thionophosphat, O,S-Dimethyl-phosphor-amido-thioat, O,S-Dimethyl-N-acetyl-phosphoramidothioat, γ-Hexachlorcyclohexan, 1,1-Di-(p-methoxyphenyl)-2,2,2-trichlor-ethan, 6,7,8,9,10,10-Hexachloro-1,5,5a,6,9,9a-hexahydro-6,9-methano-2,4,3-benzodioxathiepin-3-oxid, Pyrethrine, DL-2-Allyl-3-methylcyclopentan-(2)-on-(1)-yl-(4)-DL-cis,trans-chrysanthemat, 5-Benzyl-furyl-(3)-methyl-DL-cis,trans-chrysanthemat, 3-Phenoxy-benzyl(±)-cis,trans-2,2-dimethyl-3-(2,2-dichlorvinyl)-cyclo-propancarboxylat, α-Cyano-3-phenoxybenzyl(±)-cis,trans-2,2-dimethyl-3-(2,2-dichlorvinyl)-cyclopropancarboxylat, (s)-α-Cyano-3-phenoxybenzyl-cis(1R,3R)-2,2-dimethyl-3-(2,2-dibromvinyl)-cyclopropancarboxylat, 3,4,5,6-Tetrahydrophthalimidoethyl-DL-cis,trans-chrysanthemat, 2-Methyl-5-(2-propinyl)-3-furylmethyl-chrysanthemat, (α-Cyano-3-phenoxybenzyl)-α-isopropyl-4-chlorphenylacetat.

Wie sich aus den nachfolgenden Beispielen ergibt, haben die erfindungsgemässen Cyclopropylmethyl-(thio)-phosphorsäureamide eine bei vielen Arten deutlich bessere, bei den meisten Arten mindestens gleichwertige Wirkung gegenüber vergleichbaren bekannten Mitteln, wobei zum Vergleich in den nachstehenden Anwendungsgebieten Methamidophos der Formel

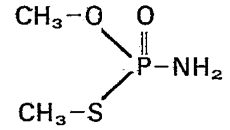

(I)

als bekanntes Handelsprodukt sowie

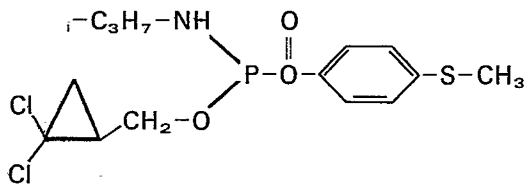

(II)

aus DE-OS 2934229 (EP-A-0024649) gewählt wurde.

*Anwendungsbeispiel 1:*

*Kontaktwirkung auf Kornkäfer (Sitophilus granaria)*

Aufgerauhte Glasplatten von 8×8 cm Kantenlänge werden mit der azetonischen Wirkstofflösung behandelt.

Nach Verdunsten des Lösungsmittels belegt man die Platten mit 100 Kornkäfern und deckt mit einem Uhrglas (⌀ 6 cm) ab. Nach 4 h werden die Käfer in unbehandelte Gefässe überführt. Die Mortalitätsrate wird nach 24 h ermittelt. Dabei wird festgestellt, wieviel Käfer in der Lage waren, nach diesem Zeitpunkt innerhalb von 60 min ein unbehandeltes Pappschälchen (⌀ 40 mm, Höhe 10 mm) zu verlassen.

In diesem Versuch erwiesen sich die Verbindungen gemäss Beispielen 2, 9, 10, 11, 18, 19, 20 und 24 bei einer Wirkstoffmenge von 0,01 bis 0,05 mg deutlich wirksamer als Vergleichsmittel I und II, die erst in einer Menge von 0,1 mg vergleichbare Wirkung hervorriefen.

*Anwendungsbeispiel 2:*

*Kontaktwirkung auf Moskito-Larven (Aedes aegypti)*

200 ml Leitungswasser werden mit der Wirkstoffaufbereitung versetzt und darauf mit 30-40 Moskito-Larven im 4. Larvenstadium besetzt.

Die Versuchstemperatur beträgt 20°C. Nach 24 h wird die Wirkung ermittelt.

Bei diesem Versuch erzielten die Wirkstoffe der Beispiele 9, 10, 11, 18, 19, 20 und 21 bei einer Konzentration von 0,01 ppm 100% Mortalität, während Vergleichsmittel I bei einer Konzentration

von 1,00 ppm 60% Mortalität und Vergleichsmittel II bei einer Konzentration von 0,025 ppm 100% Mortalität bzw. bei einer Konzentration von 0,01 ppm < 60% Mortalität erzielten.

*Anwendungsbeispiel 3:*

*Kontaktwirkung auf Stubenfliegen (Musca domestica)*
*Applikationstest*

4 Tage alte Imagines erhalten in leichter $CO_2$-Narkose 1 µl der acetonischen Wirkstofflösung auf das ventrale Abdomen appliziert. Hierzu wird eine Mikrometerspritze verwendet.

Je 20 Versuchstiere mit gleicher Behandlung bringt man in einen Cellophanbeutel (ca. 500 ml).

Nach 4 h zählt man die Tiere in Rückenlage aus und ermittelt graphisch die LD 50.

Die Wirkstoffe der Beispiele 5, 6, 13, 14 und 15 erzielten dabei eine LD 50 um 0,015 mg/Fliege, während Vergleichsmittel I eine LD 50 bei 0,07 mg/Fliege erreichte.

*Anwendungsbeispiel 4:*

*Zuchtversuch mit Stubenfliegen (Musca domestica)*

Je 4,5 ml Magermilch füllt man in 50-ml-Penicillingläser und versetzt sie darauf mit 0,5 ml der wässerigen Wirkstoffaufbereitung. Nach kurzem Mischen fügt man ein Wattebällchen (Firma Hartmann, Maintal) dazu und belegt dieses mit ca. 50 Ei-Larven der Stubenfliege.

Die Gläser lagert man abgedeckt bei Raumtemperatur und beurteilt die Entwicklung nach 7 Tagen.

In diesem Versuch zeigten die Wirkstoffe der Beispiele 2, 5, 6, 9, 10, 13, 14, 19 und 20 eine deutlich bessere Wirkung als Vergleichsmittel I und eine mindestens 10fach bessere Wirkung als Vergleichsmittel II.

*Anwendungsbeispiel 5:*

*Kontaktwirkung auf Baumwollwanzen (Dysdercus intermedius)*

Petrischalen von 10 cm Durchmesser werden mit 1 ml der acetonischen Wirkstofflösung ausgekleidet.

Nach Verdunsten des Lösungsmittels besetzt man die Schalen mit je 20 Larven des vorletzten Stadiums und registriert die Wirkung nach 24 h.

In diesem Versuch zeigten die Wirkstoffe der Beispiele 9, 10, 11, 13, 14, 15, 18, 19, 20 und 24 eine wenigstens doppelt so gute Wirkung wie die Vergleichsmittel I und II.

*Anwendungsbeispiel 6:*

*Plutella maculipennis, Kohlschaben-Raupen; Frass- und Kontaktwirkung*

Blätter von jungen Kohlpflanzen werden 3 s in die wässerige Wirkstoffemulsion getaucht und nach kurzem Abtropfen auf einen angefeuchteten Filter in eine Petrischale gelegt. Das Blatt wird darauf mit 10 Raupen des 4. Stadiums belegt.

Nach 48 h beurteilt man die Wirkung.

In diesem Versuch erwiesen sich die Wirkstoffe der Beispiele 6, 11, 19 und 22 als wenigstens doppelt so wirksam wie Vergleichsmittel I und wenigstens 10fach so wirksam wie Vergleichsmittel II.

*Anwendungsbeispiel 7:*

*Kontaktwirkung auf Blattläuse (Aphis fabae) Spritzversuch*

Getopfte Bohnenpflanzen (Vicia faba) mit starken Blattlauskolonien werden in der Spritzkammer mit den wässerigen Wirkstoffaufbereitungen tropfnass gespritzt.

Die Auswertung erfolgt nach 24 h.

In diesem Versuch erzielten die Wirkstoffe der Beispiele 2, 6, 14, 15, 16, 18, 20 und 30 eine bessere Wirkung als Vergleichsmittel I und eine 20- bis 100fach bessere Wirkung als Vergleichsmittel II.

*Anwendungsbeispiel 8:*

*Wirkung auf Spinnmilben (Tetranychus telarius)* (Test A)

Getopfte Buschbohnen, die das erste Folgeblattpaar entwickelt haben und einen starken Besatz aller Stadien der Spinnmilbe Tetranychus telarius tragen, werden in der Spritzkabine mit der wässerigen Wirkstoffaufbereitung tropfnass gespritzt. Die Pflanzen kommen dazu auf einen Drehteller und werden von allen Seiten mit 50 ml Spritzbrühe besprüht. Der Sprühvorgang dauert ca. 22 s.

Nach 8 Tagen werden die Pflanzen auf lebende Spinnmilben untersucht.

In diesem Versuch erwiesen sich die Wirkstoffe der Beispiele 2, 5, 9, 10, 14, 16, 18, 21, 24 und 30 als mindestens doppelt so wirksam wie Vergleichsbeispiel I.

*Anwendungsbeispiel 9:*

*Wirkung auf Wurzelgallennematoden (Meloidogyne incognita)*

Je 300 g Komposterde werden mit 30 ml der wässerigen Wirkstoffaufbereitung innig vermischt und in Plastiktöpfe gefüllt. Darauf bepflanzt man die Töpfe mit Tomatensetzlingen und behält diese unter Gewächshausbedingungen bei 22-24°C.

Nach 6-8 Wochen untersucht man die Wurzel auf Gallenbildung.

In diesem Versuch erwiesen sich die Wirkstoffe der Beispiele 5, 6, 9, 10, 11, 18 und 20 in einer Konzentration von unter 0,1 und teilweise unter 0,01% in der Wirkstofflösung als voll wirksam, während die Vergleichsmittel noch bei 0,1% unwirksam waren.

**Patentansprüche**

1. Cyclopropyl-methyl-(thio)-phosphorsäureamid der Formel

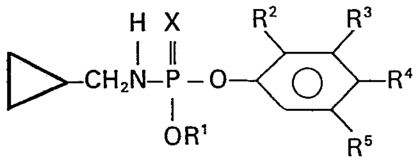

(I),

in der

$R^1$ eine unverzweigte oder verzweigte Alkylgruppe mit bis zu 4 Kohlenstoffatomen, X Sauerstoff oder Schwefel bedeutet, und $R^2$, $R^3$, $R^4$ und $R^5$ gleich oder verschieden sind und jeweils für Wasserstoff, Halogen, Nitro, Cyano, Methyl, Methylthio oder Trifluormethyl stehen.

2. Verfahren zur Herstellung von Cyclopropylmethyl(thio)phosphorsäureamiden der Formel I gemäss Anspruch 1, dadurch gekennzeichnet, dass man entweder entsprechende Phenole der Formel

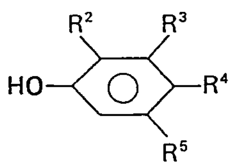

(II),

gegebenenfalls in Gegenwart eines Säureacceptors, oder deren Salze mit entsprechenden (Thio)-Phosphorsäureamidhalogeniden der Formel

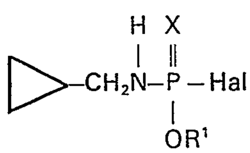

(III),

in der Hal Brom oder Chlor bedeutet, gegebenenfalls in Gegenwart eines Lösungs- oder Verdünnungsmittels bei einer ausreichenden Temperatur unterhalb von 120°C umsetzt.

3. Thiophosphorsäureesteramidhalogenid der Formel III, in der $R^1$ die in Anspruch 1 und Hal die in Anspruch 2 angegebene Bedeutung hat.

4. Schädlingsbekämpfungsmittel, enthaltend ein Cyclopropyl-methyl-(thio)-phosphorsäureamid der Formel I gemäss Anspruch 1.

5. Schädlingsbekämpfungsmittel, enthaltend einen festen oder flüssigen Trägerstoff und mindestens ein Cyclopropyl-methyl-(thio)-phosphorsäureamid der Formel I gemäss Anspruch 1.

6. Verwendung von Cyclopropyl-methyl-(thio)-phosphorsäureamiden der Formel I gemäss Anspruch 1 zur Bekämpfung von Schädlingen.

7. Verfahren zur Bekämpfung von Schädlingen, dadurch gekennzeichnet, dass man eine wirksame Menge Cyclopropyl-methyl-phosphorsäureamid der Formel I gemäss Anspruch 1 auf Schädlinge bzw. deren Lebensraum einwirken lässt.

## Revendications

1. Cyclopropyl-méthyl-(thio)-phosphoramide de formule

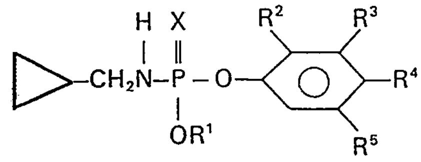

(I),

dans laquelle

$R^1$ représente un groupe alkyle droit ou ramifié contenant jusqu'à 4 atomes de carbone, X représente l'oxygène ou le soufre, et $R^2$, $R^3$, $R^4$ et $R^5$, ayant des significations identiques ou différentes, représentent chacun l'hydrogène, un halogène, un groupe nitro, cyano, méthyle, méthylethio ou trifluorométhyle.

2. Procédé de préparation des cyclopropylméthyl-(thio)-phosphoramides de formule I selon la revendication 1, caractérisé par le fait que l'on fait réagir les phénols correspondants de formule

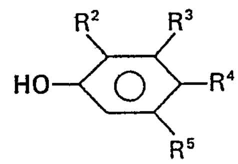

(II),

éventuellement en présence d'un accepteur d'acides, ou leurs sels, avec les halogénures de (thio)-phosphoramides correspondants de formule

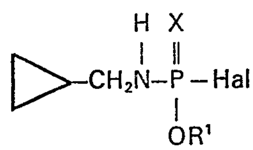

(III),

dans laquelle Hal représente le brome ou le chlore, éventuellement en présence d'un solvant ou diluant à une température suffisante, inférieure à 120°C.

3. Halogénure d'ester-amide thiophosphorique de formule III dans laquelle $R^1$ a les significations indiquées dans la revendication 1 et Hal les significations indiquées dans la revendication 2.

4. Produit pesticide contenant un cyclopropylméthyl-(thio)-phosphoramide de formule I selon la revendication 1.

5. Produit pesticide contenant un véhicule solide ou liquide et au moins un cyclopropyl-méthyl-(thio)-phosphoramide de formule I selon la revendication 1.

6. Utilisation des cyclopropyl-méthyl-(thio)-phosphoramides de formule I selon la revendication 1 dans la lutte contre les parasites.

7. Procédé pour combattre les parasites, caractérisé par le fait que l'on fait agir une quantité efficace de cyclopropylméthyl-phosphoramide de formule I selon la revendication 1 sur les parasites ou leur biotope.

## Claims

1. A cyclopropyl-methyl-(thio)-phosphoric acid amide of the formula

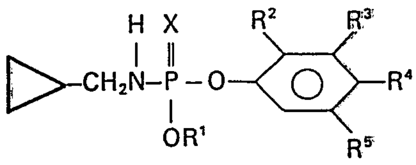

(I),

where $R^1$ is straight-chain or branched alkyl of up to 4 carbon atoms, X is oxygen or sulfur, and $R^2$, $R^3$, $R^4$ and $R^5$ are identical or different and each is hydrogen, halogen, nitro, cyano, methyl, methylthio or trifluoromethyl.

2. A process for the manufacture of a cyclopropyl-methyl-(thio)-phosphoric acid amide of the formula I as claimed in claim 1, wherein an appropriate phenol of the formula

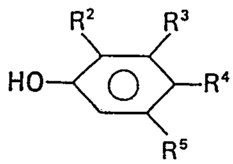

(II),

is reacted in the presence or absence of an acid acceptor, or a salt thereof is reacted with an appropriate (thio)phosphoric acid amide halide of the formula

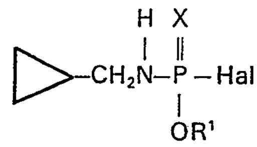

(III),

where Hal is bromine or chlorine, in the presence or absence of a solvent or diluent at a sufficient temperature below 120°C.

3. A thiophosphoric acid ester amide halide of the formula III, where $R^1$ has the meanings given in claim 1 and Hal has the meanings given in claim 2.

4. A pesticide containing a cyclopropyl-methyl-(thio)-phosphoric acid amide of the formula I as claimed in claim 1.

5. A pesticide containing a solid or liquid carrier and at least one cyclopropyl-methyl-(thio)-phosphoric acid amide of the formula I as claimed in claim 1.

6. The use of cyclopropyl-methyl-(thio)-phosphoric acid amides of the formula I as claimed in claim 1 for combating pests.

7. A process for combating pests, wherein an effective amount of a cyclopropyl-methyl-(thio)-phosphoric acid amide of the formula I as claimed in claim 1 is allowed to act on the pests or their habitat.